# EUROPEAN PATENT APPLICATION

(11) **EP 3 714 703 A1**
(43) Date of publication of application: **30.09.2020**
(21) Application number: 18849476.9
(22) Date of filing: 20.11.2018
(51) Int. Cl.: A23P 10/30

(54) **MACHINE FOR SPHERIFYING OR ENCAPSLATING LIQUID OR SEMI-LIQUID PRODUCTS**

(30) Priority: 21.11.2017 ES 201731346
(71) Applicant: Seduco Industries Corporation, S.L., 08292 Esparreguera (ES)
(72) Inventor: CUSSO GARCIA, Daniel, 08292 Esparreguera (ES)
(74) Representative: Isern Patentes y Marcas S.L.
(86) International application number: PCT/ES2018/070746
(87) International publication number: WO 2019/102051

(57) **Abstract**

The invention relates to a machine for spherifying or encapsulating a liquid or semi-liquid product by techniques of direct spherification, reverse spherification and encapsulation, comprising at least a container of a product to be spherified (2), a container of a reactive product (3), a mixer (4) wherein the specific mixture of the product is carried out, a droplet generator head (5) for the product to be spherified, and a hardening chamber (6). Furthermore, it has an electronic control unit (7) with specific software that controls the actuation of the different valves, devices, sensors, actuators and other automatic components of the machine (1), which regulate the proportions of the mixture, the pressure of the liquid to be injected, the temperature, pH levels, levels of conductivity, flow rates and frequencies of the time the droplet is in the hardening chamber as needed.

## Description

### OBJECT OF THE INVENTION

The invention, as stated in the title of the present specification, relates to a machine for spherifying or encapsulating one or more liquid or semi-liquid products that provides, in the use for which it is intended, advantages and characteristics that will be described in detail below and which represent a notable novelty in the current state of the art.

The object of the present invention is specifically a machine that has the purpose of enabling an automatic productive process for the "spherification" (providing a spherical shape) or encapsulation of liquid or semi-liquid products which, by means of a single machine, advantageously allows said production to be adapted to different needs, applying any of the three currently known technical principles, which are direct spherification, reverse spherification and spherification by means of encapsulation.

### FIELD OF APPLICATION OF THE INVENTION

The field of application of the present invention falls within the industry sector dedicated to manufacturing machines, devices and systems for producing spherical or encapsulated products.

Specifically, the present invention can be industrially used in the food, cosmetic, veterinary and pharmaceutical industries, as well as in special applications in other industrial sectors (tobacco, paint, etc.).

### BACKGROUND OF THE INVENTION

As is known, there are at least three different techniques for achieving the spherification or encapsulation of a liquid or semi-liquid product that are known, which basically consist of the following:
- Direct spherification, which is a technique in which, by means of a simple head, a droplet of a product to be encapsulated is generated, mixed with a thickening agent, such as alginate, which is dropped in a bath with a calcium ion content or similar that makes up a catalyst that gels the surface of the droplet, determining the spherification of the product. Since the droplet has sufficient weight, it goes to the bottom of the calcium cuvette, and it is necessary to regulate the time that said drop remains in the same, since the calcium ions quickly spread to the inside of the droplet and it can completely gel, taking on an appearance of a jelly bean or with a liquid part remaining on the inside.
- Reverse spherification, which is a technique in which, likewise, by means of a simple head, a droplet of a product to be encapsulated is generated, in this case mixed with a calcium ion or similar (catalyst), which is dropped in a bath of thickening agent such as alginate (thickening agent), which gels the surface of the droplet, achieving spherification. In this case, the droplet floats and remains on the surface without sinking. This technique is used as an alternative to the former because some products naturally contain calcium chloride, such as milk, yoghurt or cheese whey, for example, and if they are mixed with alginate, the thickening or gelling effect will be immediate, and therefore a liquid to spherify could not be obtained.
- Encapsulation, which is a technique that is used in products which, given the nature thereof, are not miscible (fatty acids, water, etc.), and in which by means of a concentric head, a droplet of the product to be encapsulated is generated coated with alginate (thickening agent), which is dropped in a calcium bath (catalyst) which gels said cover of the droplet of alginate, resulting in a capsule with the product in the liquid interior thereof.

The objective of the present invention is to provide the market with a machine that allows for the automatic production of the spherification or encapsulation of all types of liquid or semi-liquid products using any of aforementioned techniques, avoiding the need to use a different machine for each one of them.

With increasing frequency, the packaging sector demands that the doses of single-dose products or similar be reduced, which requires that several products currently use formats that are smaller and more manageable.

This invention provides a solution to this problem, offering a machine that allows a dose of a product to be obtained that takes up the smallest possible space by means of the form of spherification.

The present invention therefore provides the possibility to spherify products in different dimensions with the same machine and, in turn, allows the same to be applied to different products from different sectors, such as that of food, cosmetics, general industrial sectors and the pharmaceutical sector, and furthermore, it allows this process to be carried out with different known techniques, so as to be able to adapt to the one which best suits each case.

On the other hand, and as a reference to the current state of the art, it is necessary to mention that, at least as far as the applicant is concerned, they are not aware of the existence of any other machine or invention with a similar application, having technical, structural and constituent characteristics equal or similar to those of the invention claimed herein.

### DESCRIPTION OF THE INVENTION

The machine for spherifying and encapsulating a liquid or semi-liquid product of the present invention therefore constitutes a remarkable novelty within its field of application, the characteristic details that distinguish it being conveniently established in the final claims which accompany the present description.

More specifically, as was previously mentioned, what the invention proposes is a machine for automatically producing spherified or encapsulated liquid or semi-liquid products in different sizes and by means of the known techniques of direct spherification, reverse spherification and encapsulation, for which, in addition to the containers with the product to be spherified, and containers with the catalyst and/or thickening agent, it essentially comprises a buffer where the specific mixture is carried out, in a head or several heads simultaneously with the proportional electronic injection system in order to generate the droplets of the product to be spherified, and hardening chambers for the spherified droplets.

Furthermore, the machine has an electronic control unit which, by means of a specific software, controls the actuation of the different valves, devices and other automatic components of the machine, which regulate the proportions of the mixture, the pressure of the liquid to be injected, the temperature, pH levels, levels of conductivity, flow rates and frequencies of the time the droplet is in the hardening chamber as needed.

Furthermore, it is preferable that said unit incorporate a software that is able to be programmed by the user that prepares the different variables of the machine based on the variables detected in the product to be spherified and the desired data of the final product.

To form the spheres, the machine uses sensor control technology (different sensors and actuators), which allows the different variables to be controlled and the viscosity of the products to be adjusted.

Among the control variables there are pressures, temperatures, pH levels, conductivity levels, flow rates, frequencies and injection amplitudes, all electronically controlled by means of control algorithms.

The machine therefore has an automatic production control unit which, in turn, provides a degree of knowledge of the level of quality and production reached, allowing the product produced to be completely tracked, knowing the work parameters, dosed amounts and variables used in every moment.

In any case, the machine has at least one head which, preferably is an interchangeable head to allow for the use of a simple one, in order to apply direct or reverse spherification techniques, wherein the droplets that it generates are made up of a mixture of the product to be spherified and the thickening agent or a catalyst, the use of a concentric head, in order to apply the encapsulating technique, wherein a central nozzle injects the product to be spherified and a surrounding nozzle injects the thickening product that will cover the surface of the droplet before it falls, and to use one type of head or another with different calibres.

More specifically, the heads the machine uses are hydraulically stable and balanced electronic injection heads in order to be able to carry out spherification with exactitude and a high degree of control over the proportions of the product. To do so, it has hydraulic technologies such as the ones used in the 3D printer heads, so as to provide a proper finish to the inner tubes for distributing the product and promote a stable injection. This is combined with an electronic injection system controlled by the aforementioned control automatism.

In turn, the hardening chamber, which allows for the hardening of the droplets resulting from direct spherification, reverse spherification or encapsulation, has inner guides to improve the formation of the sphere.

Said hardening chamber is a chamber for receiving and stabilising the droplet and constitutes a module for the collection and final formation of the spheres for the subsequent finishing and stabilisation, obtaining the expected spheres with a suitable resistance for the subsequent manipulation and use thereof.

In fact, said hardening chamber is a collection module that can be defined as a hydrodynamic module for collection and stabilisation by the combination of hydraulic elements that allow the spheres produced, which are initially liquid, to be collected in a liquid without being destroyed in the reception thereof and the outer layer thereof is hardened by means of the indicated liquid, in a suitable way based on the type of technique used.

To this end, said chamber comprises a hydraulically controlled vortex that is combined with a design of the chamber body structured to provide the ball with a smooth reception and subsequent treatment, which constitutes a great technological novelty, given that it allows production per time unit to be increased.

Furthermore, is important to highlight that the machine has, in the preferred embodiment thereof, two hardening chambers that in one way or another adapt to the technology used in spherification (direct, reverse or encapsulation), as well as to the viscosity and density of the final spherified product, each one connected to a head and a buffer or mixer.

Therefore, the machine allows a wide variety of products to be encapsulated due to the programmable ability thereof, allowing the products to be spherified, cooled, heated, further allowing for the use of different products for stabilising the membranes of the spheres made.

Said chambers therefore make up a final reception system for the spheres once the programmed reaction times are completed, to thus obtain different hardness in the finishing of the spheres by means of digital control of the flow rates and exposure times of the spheres.

Once the spheres are formed and stabilised in the aforementioned hardening chamber or chambers, the machine provides an assembly of washing and drying modules that makes up a compact system which facilitates the extraction of the catalyst and allows for the final treatment of the spheres with cleaning substances or by dosing with preserving products or similar.

Said modules are also automatically controlled, allowing the spheres received to be ready for the subsequent collection and use thereof, after passing through the final packaging module, preferably provided in the machine of the invention.

For example, in said module they will be stored in containers with a preprogrammed volume, measuring out the number of spheres necessary to ensure that the container does not overflow or that the weight of the spheres themselves does not cause the crushing of the same.

Lastly, it must be mentioned that the temperature levels of the set of elements comprised by the machine is controlled to ensure the correct levels for the production parameters. To this end, the automatic control unit is used to ensure that the assembly is always within the optimum operating conditions and allows the possible variations of the different parameters to be recorded and treated, as well as alarms or incidents that may affect the production of spheres.

The machine for spherifying or encapsulating a liquid or semi-liquid product described therefore consists of an innovative structure with characteristics heretofore unknown for its intended purpose, reasons which, taken together with its usefulness, provide it with sufficient grounds for obtaining the requested exclusivity privilege.

### DESCRIPTION OF THE DRAWINGS

To complement the present description, and for the purpose of helping to make the characteristics of the invention more readily understandable, the present specification is accompanied by drawings, constituting an integral part of the same, which by way of illustration and not limitation represents the following:

Figure number 1 shows a schematic plan view of an example of the machine for spherifying or encapsulating a liquid or semi-liquid product, object of the invention, in which the main parts and elements comprised by the same, as well as the configuration and arrangement thereof, can be seen in a general way.

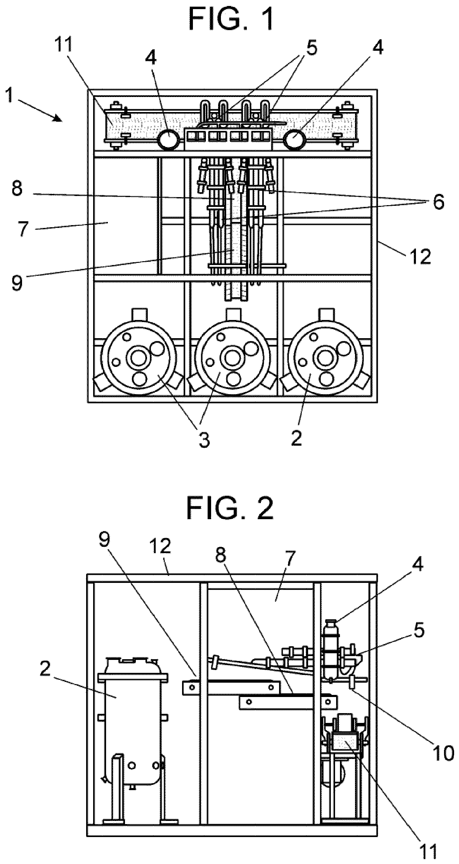

Figure number 2 shows a schematic elevation view of the example of the machine according to the invention shown in Figure 1, in which the configuration and arrangement of the main parts and elements thereof can likewise be seen.

### PREFERRED EMBODIMENT OF THE INVENTION

In view of the aforementioned figures and, in accordance with the numbering adopted, an example of a non-limiting exemplary embodiment of the machine for spherifying or encapsulating a liquid or semi-liquid product envisaged can be observed therein, which comprises the parts and elements indicated and described in detail below.

Thus, as can be seen in said figures, the machine (1) in question essentially comprises at least one container for a product to be spherified (2), a container for a reactive product (3), catalyst or thickening agent, a mixer (4) or buffer wherein the specific mixture of the product to be spherified and the reactive product (3) is carried out, an electronic injection head (5), a droplet generator for the product to be spherified, and a hardening chamber (6) in which the droplets generated by the head (5) are introduced in order to be spherified.

The machine (1) preferably has two containers for the reactive product (3), one for the catalyst and the other for the thickening agent, allowing for the use of one or the other at all times during production based on the type of spherification or encapsulation technology used.

Furthermore, the machine (1) has an electronic control unit, shown in the figures as a compartment with the reference (7) which, by means of a specific software, controls the actuation of the different valves, devices, sensors, actuators and other automatic components of the machine (1), which regulate the proportions of the mixture, the pressure of the liquid to be injected, the temperature, pH levels, levels of conductivity, flow rates and frequencies of the time the droplet is in the hardening chamber as needed.

Furthermore, it is preferable that said electronic control unit (7) incorporate a software that is able to be programmed by the user based on different variables of the product to be spherified and desired final product.

In any case, the machine preferably has more than one injection head (5), which can be of the simple type, in order to apply direct or reverse spherification techniques, of the concentric type, in order to apply the technique of encapsulation, or of both types combined. And, in the preferred embodiment, said head or heads (5) are interchangeable so as to allow for the use of one or the other. In any case the heads (5) are electronic injection heads and are controlled by the electronic control unit (7) of the machine (1).

In turn, the hardening chamber (6) incorporates inner guides and hydraulic elements that collect the droplets in a liquid provided on the inside thereof for the formation of the sphere.

Specifically, said elements are a hydrodynamic vortex for receiving spheres, hydraulically controlled and combined with a structural design of the body of the chamber in the form of a tube to provide a smooth reception for the ball and the subsequent treatment thereof.

It is important to mention that the machine preferably has two or more hardening chambers (6) arranged to receive droplets from at least two or more injection heads (5) connected to the respective mixers (4).

According to the characteristics of the machine (1) of the invention, it must be mentioned that in the preferred embodiment thereof, it also comprises a washing module (8), preferably with a prior draining module (9), conveniently arranged after the hardening chamber or chambers (6), to which the already spherified droplets are directed, wherein the extraction of the catalyst is facilitated and the final treatment of the spheres takes place, with cleaning substances or a dose of preserving products or similar, and a drying module (10), only shown in Figure 2.

Said modules (8, 9 10) are also automatically controlled by the electronic control unit (7).

Lastly, the machine (1) has a final packaging module (not shown) arranged after a belt (11) for receiving the spherified product, by which it is carried to the same after passing through the drying module (10).

It must be mentioned that the set of elements comprised by the machine (1) is housed inside a structure (12) that allows for the control of the thermal level thereof to ensure the correct level of the production parameters.

Preferably, the materials used in the present invention are inert and specific, according to the scope of application, such as fine surfaces that prevent the accumulation of waste or production materials used and as a result facilitate the cleaning of the machine.

The machine for spherifying or encapsulating a liquid or semi-liquid product can comprise an automatic cleaning system or clean-in-place system, which, after the production cycle, enables the machine to be prepared for the next cycle. Said cleaning system preferably consists of the incorporation of different injection elements for injecting a cleaning liquid on the surfaces to be cleaned, such as the reactors. These injection elements are preferably shower balls. The cleaning system preferably comprises an independent parallel circuit for supplying the necessary cleaning liquids for the correct functioning thereof.

The machine for spherifying or encapsulating a liquid or semi-liquid product optionally comprises a telecontrol system for the parameters, which allows for the remote control, monitoring or modification thereof, without the need to be present. Said telecontrol system is preferably a wireless connection module, such as Wi-Fi, or carried out by means of a cable connection to a computer network that provides access to the control and operation parameters from a point that is distanced from the machine. The user who remotely connects to the machine has a level of control of the machine that allows them to see and act in a partial or complete way on the working functions of the same, as well as to receive alerts concerning the malfunctioning of the machine or regarding the end of the programmed production. Likewise, this telecontrol system allows the technical support personnel of the company or a third party to have access to technical information of the machine with the aim of making an assessment of the machine and detecting a possible problem, as well as for activating functions of the machine that allow for a solution to the problem detected.

Having sufficiently described the nature of the present invention, as well as the ways of implementing it, it is not considered necessary to extend its explanation for any expert in the state of the art to understand its scope and the advantages which derive from it, specifying that, within its essence, it can be carried out in other embodiments that differ in detail from the one provided by way of example, and which are also covered by the requested protection, provided that they do not alter, change or modify its fundamental principle.

## Claims

1. A machine for spherifying or encapsulating a liquid or semi-liquid product which, applicable for the automatic production of spherified or encapsulated liquids and semi-liquids in different sizes and by means of the known techniques of direct spherification, inverse spherification and encapsulation, and which comprises at least a container for the product to be spherified (2), a container for the reactive product (3), catalyst or thickening agent, a mixer (4) or buffer in which the specific mixture of the product to be spherified and the reactive product (3) is carried out, is **characterised in that** it comprises an electronic injection head (5), a droplet generator for the product to be spherified, and a hardening chamber (6) wherein the droplets generated by the head (5) of the product to be spherified are introduced, and which has an electronic control unit (7) which, through a specific software, controls the actuation of the different valves, devices, sensors, actuators and other automatic components of the machine (1), which regulate the proportions of the mixture, the pressure of the liquid to be injected, the temperature, pH levels, levels of conductivity, flow rates, and frequencies of the time the droplet is in the hardening chamber as needed.

2. The machine for spherifying or encapsulating a liquid or semi-liquid product, according to claim 1, **characterised in that** the electronic control unit (7) further incorporates a software that is able to be programmed by the user based on different variables of the product to be spherified and the desired final product.

3. The machine for spherifying or encapsulating a liquid or semi-liquid product, according to any of claims 1 to 2, **characterised in that** it has more than one injection head (5), which can be of the simple type, in order to apply direct or reverse spherification techniques, of the concentric type, in order to apply the technique of encapsulation, or both types combined.

4. The machine for spherifying or encapsulating a liquid or semi-liquid product, according to any of claims 1 to 3, **characterised in that** the head or heads (5) are interchangeable.

5. The machine for spherifying or encapsulating a liquid or semi-liquid product, according to any of claims 1 to 4, **characterised in that** the hardening chamber (6) incorporates inner guides and hydraulic elements that collect the droplets in a liquid provided on the inside thereof for the formation of the sphere.

6. The machine for spherifying or encapsulating a liquid or semi-liquid product, according to claim 5, **characterised in that** the hardening chamber (6) incorporates a hydraulically controlled vortex.

7. The machine for spherifying or encapsulating a liquid or semi-liquid product, according to any of claims 1 to 6, **characterised in that** it comprises at least two hardening chambers (6) arranged to receive the droplets of at least two injection heads (5) connected to respective mixers (4).

8. The machine for spherifying or encapsulating a liquid or semi-liquid product, according to any of claims 1 to 7, **characterised in that** arranged after the hardening chamber or chambers (6), to which the already spherified droplets are directed, it comprises a washing module (8).

9. The machine for spherifying or encapsulating a liquid or semi-liquid product, according to claim 8, **characterised in that** it comprises a draining module (9) prior to the washing module (8).

10. The machine for spherifying or encapsulating a liquid or semi-liquid product, according to any of claims 8 or 9, **characterised in that** it comprises a drying module (10).

11. The machine for spherifying or encapsulating a liquid or semi-liquid product, according to any of claims 1 to 12, **characterised in that** it has a final packaging module.

12. The machine for spherifying or encapsulating a liquid or semi-liquid product, according to any of claims 1 to 11, **characterised in that** the set of elements it comprises is housed inside a structure (12) that allows for the control of the thermal level.

13. The machine for spherifying or encapsulating a liquid or semi-liquid product, according to any of claims 1 to 12, **characterised in that** it has two containers for the reactive product (3), one for the catalyst and the other for the thickening agent.

14. The machine for spherifying or encapsulating a liquid or semi-liquid product according to any of claims 1 to 13, **characterised in that** it comprises an automatic cleaning system or clean-in-place system, which, after a production cycle, allows the machine to be prepared for the next cycle.

15. The machine for spherifying or encapsulating a liquid or semi-liquid product according to the claims 1 to 14, **characterised in that** it comprises a telecontrol system for the parameters that allows for the remote control, monitoring or modification of the same.
